# FASCICULE DE BREVET EUROPEEN

(11) **EP 3 053 205 B1**
(45) Date de publication et mention de la délivrance du brevet: **27.02.2019**
(21) Numéro de dépôt: 14772362.1
(22) Date de dépôt: 25.09.2014
(51) Int. Cl.: H01M 2/10, H01M 2/20

(54) **MODULE DE BATTERIE ÉLECTRIQUE**
ELEKTROBATTERIEMODUL
ELECTRIC BATTERY MODULE

(30) Priorité: 30.09.2013 FR 1359406
(43) Date de publication de la demande: 10.08.2016
(73) Titulaire: Tyva Energie, 07100 Annonay (FR)
(72) Inventeur: Claudel, Thierry, 07100- Annonay (FR)
(74) Mandataire: Casalonga
(86) Numéro de dépôt international: PCT/EP2014/070454
(87) Numéro de publication internationale: WO 2015/044250

(56) Documents cités:
- EP-A1- 2 207 221
- DE-A1-102011 075 044
- JP-A- 2001 325 931
- JP-A- 2013 020 841
- US-A- 1 546 359
- US-A- 2 449 811
- US-A- 5 489 486
- US-A1- 2006 019 155
- US-A1- 2010 104 932

## Description

La présente invention concerne le domaine des batteries électriques.

Il existe un besoin de pouvoir disposer de batteries, construites à partir de cellules électrochimiques individuelles, de piles électriques non rechargeables ou rechargeables, d'accumulateurs électriques rechargeables, de piles à combustibles, présentant des caractéristiques électriques différentes, en fonction de leurs applications.

Couramment, de telles batteries sont fabriquées sur mesure, au cas par cas. Les piles électriques, généralement cylindriques, sont placées côte à côte et reliées par des languettes métalliques conductrices soudées par points sur les extrémités radiales formant des contacts électriques, en série et/ou en parallèle. Cet ensemble est ensuite placé dans une gaine en une matière plastique thermo-rétractable ou dans un boîtier adapté en matière plastique ou métallique réalisé sur mesure. Un tel boîtier porte généralement des bornes qui sont reliées aux bornes de la batterie par des fils électriques. Une telle manière de procéder est longue, fastidieuse et coûteuse.

Par ailleurs, le brevet EP 2 207 221 décrit des modules de batterie comprenant un boîtier dans lequel sont placées côte à côte, longitudinalement, des piles électriques. En vue de montages souhaités en série et/ou en parallèle des piles électriques, ces dernières sont reliées sélectivement à l'intérieur du boîtier par des languettes métalliques conductrices. Les extrémités radiales du boîtier sont munies d'inserts traversants métalliques, ces inserts étant reliés aux extrémités de la batterie constituée dans le boîtier et constituant des bornes de branchement extérieur. Le boîtier est de section rectangulaire et ses faces latérales opposées présentent les unes des rainures et les autres des nervures, pour permettre un accouplement côte à côte de différents modules identiques et une connexion électrique entre eux grâce à des languettes métalliques conductrices dont les extrémités sont placées dans des évidements des extrémités des modules et reliées aux inserts métalliques dont sont pourvues ces extrémités. Il s'agit là d'une batterie complexe et donc coûteuse.

Différentes batteries non modulaires sont décrites dans les brevets US 2 449 811, US 1 546 359, US 2010/0104932, dans lesquels les piles électriques sont reliées électriquement par des languettes disposées à l'extérieur de leurs supports, ces modules de batteries étant complètement inadaptés pour pouvoir être reliés électriquement entre eux.

La présente invention a pour but de proposer un module de batterie dont la fabrication est facilitée et dont la modularité est améliorée.

Selon un mode de réalisation, il est proposé un module de batterie électrique qui comprend un boîtier comprenant un corps longitudinal apte à recevoir longitudinalement une pluralité de piles électriques, les unes à côté des autres, et un couvercle d'extrémité accouplé à chaque extrémité dudit corps longitudinal, ledit boîtier comprenant des premiers moyens d'accouplement et des seconds moyens d'accouplement de formes complémentaires, de telle sorte que des premiers moyens d'accouplement d'un module peuvent être accouplés à des seconds moyens d'accouplement d'au moins un autre module par conjugaison de formes.

Le module de batterie électrique comprend en outre une plaque intérieure radiale de connexion électrique et une plaque extérieure radiale de connexion électrique, disposées axialement de part et d'autre de chaque couvercle d'extrémité ; ainsi qu'au moins un plot longitudinal de connexion électrique desdites plaques intérieure et extérieure de connexion électrique, traversant axialement chaque couvercle.

Chaque plaque intérieure radiale de connexion électrique comprend une pluralité de moyens de contact électrique aptes à être respectivement en contact sur un contact électrique d'une extrémité correspondante desdites piles électriques.

Chaque plaque extérieure radiale de connexion électrique comprend une pluralité de moyens de distribution électrique, de telle sorte que ces moyens de distribution électrique peuvent être sélectivement reliés à des moyens de distribution électrique d'au moins un autre module accouplé à ce module.

Le module de batterie peut comprendre un moyen de fixation traversant ledit couvercle pour fixer lesdites plaques radiales intérieure et extérieure de connexion électrique l'une par rapport à l'autre, ce moyen de fixation incluant ledit plot de connexion électrique.

Selon une variante de réalisation, au moins l'une desdites plaques de connexion électrique peut comprendre un disque métallique.

Selon une autre variante de réalisation, au moins l'une desdites plaques de connexion électrique peut comprendre une plaque support en une matière isolante et un réseau de connexion électrique en une matière conductrice de l'électricité, porté par cette plaque support.

Le module de batterie peut comprendre des moyens de fixation d'organes de connexion électrique, en contact sur lesdits moyens de contact électrique de ladite plaque radiale extérieure de connexion électrique.

Le module de batterie peut comprendre des moyens de fixation pour fixer ladite plaque intérieure de connexion électrique audit corps longitudinal.

Le module de batterie peut comprendre des moyens de fixation pour fixer ledit couvercle audit corps longitudinal.

Le module de batterie peut comprendre des moyens de fixation pour fixer ladite plaque extérieure de connexion électrique audit couvercle.

Ladite plaque extérieure de connexion électrique peut être en appui sur ledit couvercle, le moyen de fixation pour fixer lesdites plaques intérieure et extérieure de connexion électrique l'une par rapport à l'autre agissant axialement pour maintenir ledit couvercle accouplé axialement au corps longitudinal.

Le module de batterie peut comprendre des moyens d'indexation de la plaque radiale intérieure de connexion électrique et/ou de la plaque radiale extérieure de connexion électrique par rapport au boîtier.

Le module de batterie peut comprendre des moyens d'indexation du couvercle par rapport audit corps longitudinal.

Ledit corps longitudinal peut comprendre un cloisonnement intérieur délimitant une pluralité de logements longitudinaux pour recevoir les piles électriques.

Lesdits moyens d'accouplement peuvent être aménagés sur les flancs dudit corps longitudinal.

Lesdits moyens d'accouplement peuvent comprendre des rainures et des nervures longitudinales complémentaires.

Lesdits moyens d'accouplement peuvent être aménagés sur ledit couvercle.

Lesdits moyens d'accouplement comprennent des évidements et des bossages en saillie complémentaires.

Il est également proposé un assemblage d'au moins deux modules de batterie, dans lequel deux modules de batterie sont placés longitudinalement l'un à côté de l'autre et accouplés latéralement par l'intermédiaire desdites premiers et seconds moyens d'accouplement complémentaires correspondants dans une position telle que leurs plaques extérieures radiales de connexion électrique s'étendent dans un même plan radial, ces plaques extérieures radiales de connexion électrique étant connectés électriquement par une plaque métallique de liaison ; et/ou dans lequel deux modules de batterie sont alignés l'un au-dessus de l'autre et accouplés longitudinalement par l'intermédiaire desdites premiers et seconds moyens d'accouplement complémentaires correspondants dans une position telle que leurs plaques extérieures radiales de connexion électrique s'étendent l'une en vis-à-vis de l'autre, ces plaques extérieures radiales de connexion électrique étant connectés électriquement par l'intermédiaire d'une languette élastique ou ressort.

Un module de batterie selon la présente invention va maintenant être décrit à titre d'exemple non limitatif, illustré par le dessin sur lequel :
- la figure 1 représente une vue éclatée de côté du module de batterie :
- la figure 2 représente une coupe verticale de la vue éclatée de la figure 1 ;
- la figure 3 représente une coupe transversale médiane du module de batterie ;
- la figure 4 représente une vue en bout du module de batterie, sans couvercle et sans disque extérieur radial ;
- la figure 5 représente une vue en bout du module de batterie, avec couvercle et sans disque extérieur radial ;
- la figure 6 représente une vue en bout complète du module de batterie ;
- la figure 7 montre un détail en coupe du module de batterie ;
- la figure 8 représente une coupe longitudinale du module de batterie ;
- la figure 9 représente une vue d'un côté du module de batterie ;
- la figure 10 représente une vue d'un autre côté du module de batterie ;
- la figure 11 représente une vue en bout de plusieurs modules de batterie accouplés latéralement ;
- la figure 12 représente une coupe longitudinale de deux modules de batterie accouplés latéralement ;
- la figure 13 représente une vue de côté de deux modules de batterie accouplés latéralement ;
- la figure 14 représente une vue de côté de deux modules de batterie accouplés bout à bout ;
- la figure 15 représente une coupe longitudinale de deux modules de batterie accouplés bout à bout ; et
- la figure 16 représente une vue extérieure en perspective du module de batterie.

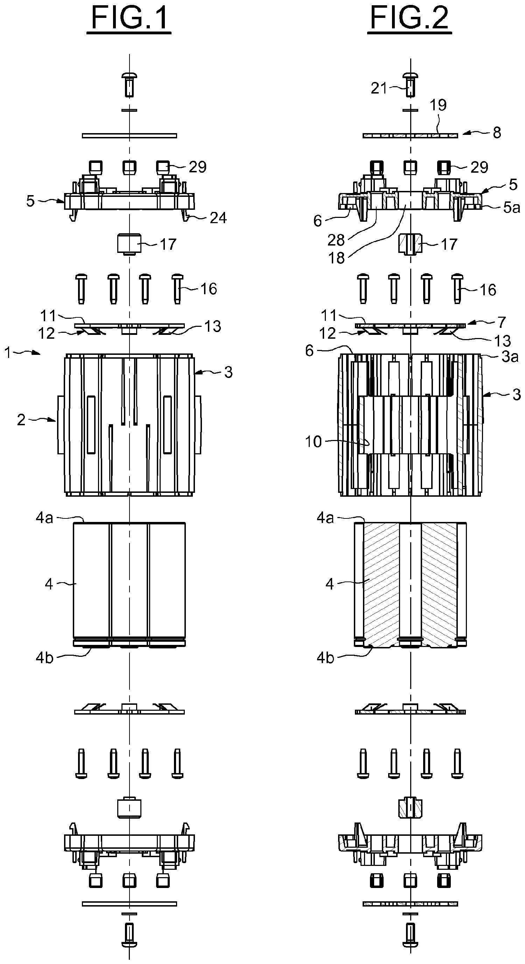

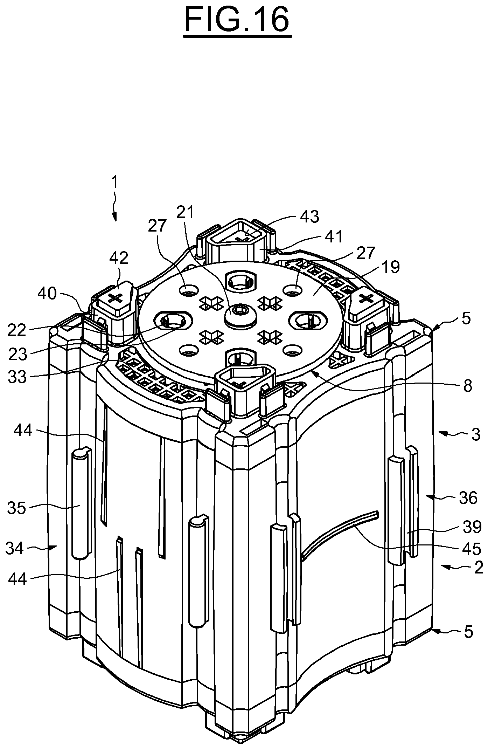

Comme illustré en particulier sur les figures 1, 2 et 16, un module de batterie 1 comprend un boîtier ou enveloppe 2, par exemple en une matière plastique, qui comprend un corps longitudinal 3 ouvert à ses extrémités, dont le pourtour est substantiellement de section carrée ou rectangulaire, et apte à recevoir longitudinalement une pluralité de piles électriques 4, les unes à côté ou à proximité des autres.

Le boîtier 2 comprend en outre des couvercles opposés d'extrémité 5 accouplés aux extrémités opposées du corps longitudinal 3 selon des plans de joints périphériques 6. A cet effet, les bords des extrémités du corps longitudinal 3 et les bords des couvercles d'extrémité 5 présentent des épaulements extérieurs et intérieurs 3a et 5a de positionnement s'emboîtant longitudinalement les uns dans les autres et indexant les couvercles 5 par rapport au corps longitudinal 3.

Les piles électriques 4 sont généralement cylindriques et présentent des faces radiales d'extrémité 4a et 4b formant des contacts électriques opposés, positifs et négatifs. Selon la présente description, on entend par « piles électriques » notamment toutes cellules électrochimiques individuelles, toutes piles électriques non rechargeables ou rechargeables et tous accumulateurs électriques rechargeables.

A titre de moyens de connexion électrique, le module de batterie 1 comprend des plaques intérieures radiales de connexion électrique 7, placées à l'intérieur du boîtier 2, respectivement entre les extrémités des piles électriques 4 et les couvercles d'extrémité 5, ainsi que des plaques extérieures radiales de connexion électrique 8, placées à l'extérieur du boîtier 2, de telle sorte que, respectivement, les plaques intérieures radiales de connexion électrique 7 et les plaques extérieures radiales de connexion électrique 8 sont disposées axialement de part et d'autre des couvercles d'extrémité 5.

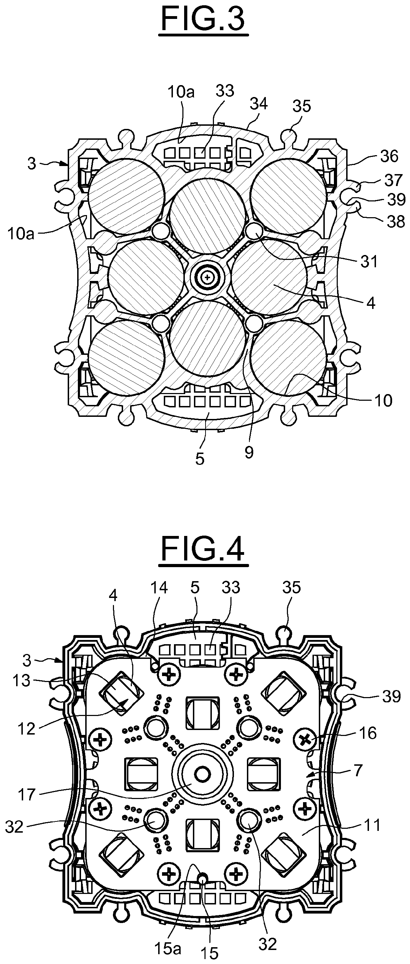

Comme illustré en particulier sur la figure 3, le corps longitudinal 3 comprend un cloisonnement intérieur longitudinal 9 délimitant des logements longitudinaux 10 de réception des piles électriques 4 de telle sorte que ces piles électriques sont à faible distance les unes des autres.

Selon l'exemple représenté, ce cloisonnement intérieur longitudinal 8 délimite huit logements longitudinaux de réception 10. Quatre logements intérieurs sont disposés en étoile à 90° les uns par rapport aux autres, leurs centres étant disposés sur un même cercle et en correspondance avec les milieux des côtés du corps longitudinal 3. Quatre logements extérieurs sont disposés en étoile à 90° les uns par rapport aux autres et décalés de 45° par rapport aux logements intérieurs, leurs centres étant disposés sur un même cercle et substantiellement en correspondance avec les diagonales du corps longitudinal 3. Le cloisonnement intérieur longitudinal 8 délimite également des couloirs longitudinaux 10a adjacents aux côtés du corps longitudinal 3.

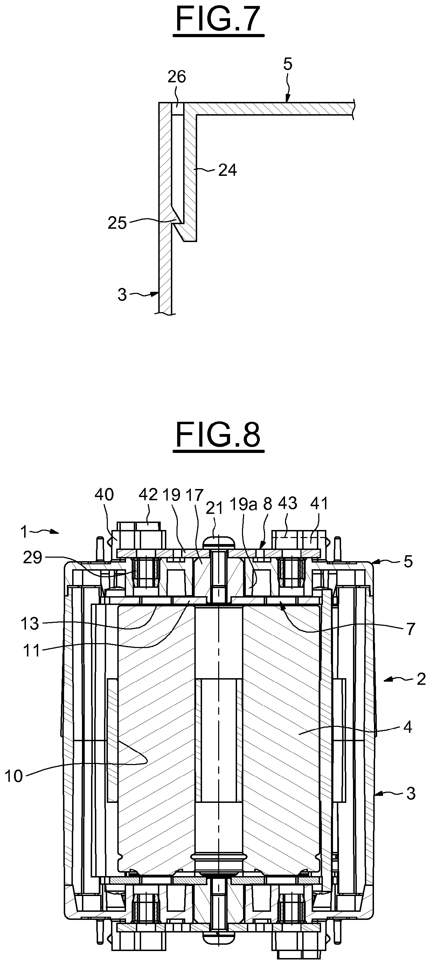

Comme illustré en particulier sur les figures 4 et 8, chaque plaque intérieure radiale de connexion électrique 7 comprend une plaque support 11 en une matière isolante, munie d'un réseau de connexion électrique 12, réalisé en surface et/ou en profondeur. Ce réseau de connexion électrique 12 inclut, du côté des piles électriques 4, des languettes métalliques élastiques 13 réparties de façon à venir élastiquement en appui sur les faces correspondantes d'extrémité des piles électriques 4, formant des contacts électriques de même polarité ou de polarités différentes. Le réseau de connexion électrique 12 peut comprendre des pistes métalliques de connexion électrique aménagées en surface ou intégrées à la plaque support 11 à la manière des plaques courantes de circuits imprimés. Ainsi, la plaque intérieure radiale de connexion électrique 7 constitue un moyen direct de collecte électrique, intérieure au boîtier.

Chaque plaque support 11 est en appui sur des zones intérieures périphériques formant un épaulement intérieur radial 14 du corps longitudinal et est indexée grâce à des doigts longitudinaux en saillie 15 du corps longitudinal 3 engagés dans des passages 15a de la plaque support 11.

Chaque plaque support 11 est fixée au corps longitudinal 3 grâce à des vis longitudinales 16 qui la traversent.

Ainsi, les piles électriques 4 sont prises axialement entre les languettes 13 des plaques intérieures radiales opposées de connexion électrique 7 et peuvent être installées, sélectivement, électriquement en parallèle et/ou en série, en fonction de la disposition du réseau de connexion électrique 12. Dans le cas où deux piles électriques sont reliées en série, le réseau de connexion électrique 12 comprend une branche spécifique pour relier ces dernières.

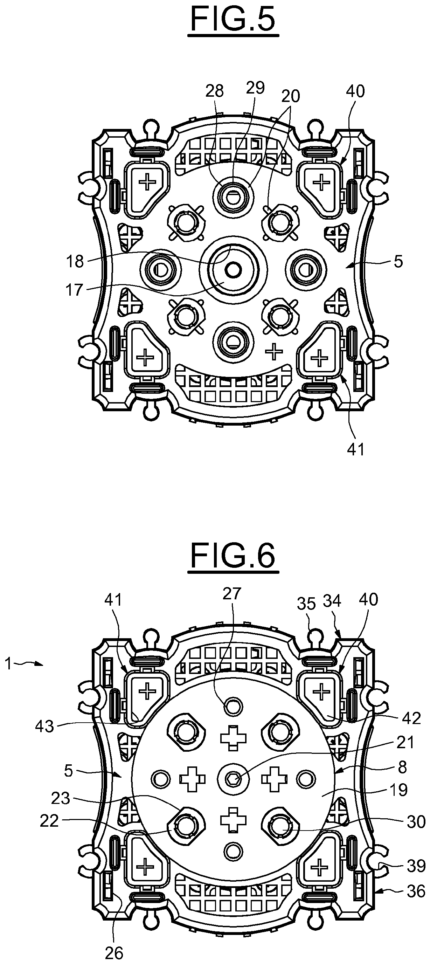

Comme illustré en particulier sur les figures 4 et 5, chaque plaque support 11 est munie d'un plot cylindrique central métallique 17 qui s'étend longitudinalement en saillie vers l'extérieur et qui est relié à son réseau précité de connexion électrique 12. Ce plot central 17 peut être monté sur la plaque support 11 par exemple par sertissage ou soudage ou vissage ou collage.

Comme illustré plus particulièrement sur la figure 8, chaque plot métallique central 17 s'étend au travers d'un passage central traversant 18 du couvercle d'extrémité 5.

Comme illustré plus particulièrement sur les figures 6, 8 et 16, chaque plaque extérieure radiale de connexion électrique 8, qui constitue un moyen de distribution électrique pour réaliser une pluralité de liaisons électriques extérieures, comprend un disque radial métallique 19 qui vient en appui sur des bossages extérieurs 20 en saillie axiale, formés sur les faces extérieures radiales du couvercle d'extrémité 5 correspondant. Chaque disque métallique 19 présente un diamètre nettement plus grand que le diamètre du plot central 17 mais plus petit que le plus petit des côtés du couvercle 5, de façon à ne pas déborder latéralement.

Chaque disque métallique 19 est fixé, par l'intermédiaire d'une vis centrale métallique de fixation 21 qui le traverse, sur le plot central métallique 17 de la plaque intérieure radiale de connexion électrique 7 correspondante, en maintenant le couvercle correspondant 5 en appui sur les bossages 20 et accouplé au corps longitudinal 3.

Ainsi, chaque plot métallique en saillie 17 et chaque vis métallique de fixation 21 constituent un moyen de connexion électrique entre le disque métallique correspondant 19 formant la plaque extérieure de connexion électrique 8 correspondante et les languettes métalliques 13 du réseau de connexion électrique 12 de la plaque intérieure de connexion électrique 7 correspondante.

Il en résulte que les disques radiaux métalliques 19 disposés à l'extérieur et aux extrémités opposées du module 1 constituent des pôles positifs et négatifs de la batterie.

Chaque disque radial métallique 19 est indexé par rapport au couvercle d'extrémité 5 correspondant. A cet effet, chaque couvercle d'extrémité 5 présente des bossages d'appui en saillie 22 qui sont engagés dans des passages traversants 23 du disque radial métallique 19 correspondant. Les bossages en saillie 22 et les passages traversants 23 présentent des formes oblongues. Selon l'exemple représenté, quatre bossages en saillie 22 et quatre passages traversants 23 sont prévus, décalés angulairement de 90° et disposés substantiellement selon les diagonales de chaque couvercle 5 et sur un même diamètre.

De préférence, ces formes oblongues associées au couvercle d'extrémité et au disque radial prévus à l'une des extrémités du corps longitudinal 3 et les formes oblongues associées au couvercle d'extrémité et au disque radial prévus à l'autre extrémité du corps longitudinal 3 présentent des orientations différentes, de telle sorte que chaque couvercle d'extrémité 5 et chaque disque 19 correspondent à une polarité des piles électriques 4.

Comme illustré en particulier sur les figures 6 et 7, chaque couvercle 5 comprend des pattes intérieures longitudinales 24 en forme de crochets, déformables élastiquement, venant en prise, par déformation élastique, avec des bossages intérieurs d'accrochage 25 du corps longitudinal 3 de façon à maintenir le couvercle d'extrémité 5 accouplé au corps longitudinal.

Chaque couvercle 5 présente des passages traversants 26 d'accès aux pattes d'accrochage 24 de façon à pouvoir les écarter avec un outil et séparer le couvercle d'extrémité 5 du corps longitudinal 3. Selon l'exemple représenté, des pattes d'accrochage 24, des bossages d'accrochage 25 et des passages d'accès 26 sont prévus aux quatre coins des couvercles d'extrémité 5 et des extrémités du corps longitudinal 3.

Comme illustré en particulier sur les figures 5 et 6, chaque disque radial métallique 19 présente quatre trous traversants 27 disposés à 90° les uns par rapport aux autres, sur un même cercle, et en correspondance avec les milieux des côtés du couvercle d'extrémité 5 correspondant.

Au-dessous de ces trous traversants 27, chaque couvercle d'extrémité 5 présente un bossage de fixation 20 sur lequel il prend appui. Chaque bossage de fixation 20 présente un trou 28 dans lequel est vissé un insert fileté 29.

Comme illustré en particulier sur les figures 3, 4 et 6, les couvercles 5 présentent des trous traversants 30 aménagés au travers des bossages d'indexation 22, qui sont alignés longitudinalement, le corps longitudinal 3 présente, au travers de son cloisonnement 9 et dans les zones séparant les logements intérieurs et extérieurs précités 10, des passages longitudinaux 31 et les plaques supports 11 présentent des passages traversants 32. Les trous traversants 30 des couvercles 5, les passages longitudinaux 31 et les trous traversants 32 des plaques supports 11 sont alignés longitudinalement constituant des canaux longitudinaux pour recevoir longitudinalement des tiges de liaison traversant ainsi, de part en part, le module 1.

Optionnellement, chaque couvercle d'extrémité 5 présente des parties en saillie 19a pour appliquer la plaque intérieure de connexion électrique 7 sur l'épaulement intérieur radial 14 correspondant du corps longitudinal 3.

Chaque couvercle 5 présente des ouvertures traversantes d'aération 33, de telle sorte que de l'air de refroidissement peut circuler à l'intérieur du boîtier 2 en passant par les ouvertures 10, 10a, 33.

Comme illustré en particulier sur les figures 3, 9 et 16, deux faces extérieures opposées 34 du corps longitudinal 3 présentent, en saillie, des nervures longitudinales d'accouplement 35 de section en forme d'omégas. Selon l'exemple représenté, chacune de ces faces extérieures présente deux nervures 35 espacées transversalement de façon symétrique par rapport au plan médian correspondant du corps longitudinal 3 et s'étendant sur une partie médiane de ces faces extérieures.

Comme illustré en particulier sur les figures 3, 10 et 16, les deux autres faces extérieures opposées 36 du corps longitudinal 3 présentent, en saillie, des paires de nervures longitudinales 37 et 38 déterminant des rainures longitudinales d'accouplement 39 en forme de C. Selon l'exemple représenté, chacune de ces faces extérieures présente deux rainures longitudinales 39 espacées transversalement de façon symétrique par rapport au plan médian correspondant du corps longitudinal 3 et s'étendant sur une partie médiane de ces faces extérieures.

Les nervures longitudinales 35 et les rainures longitudinales 39 présentent des sections complémentaires et présentent les mêmes écartements entre elles.

Comme illustré en particulier sur les figures 6, 8, 9, 10 et 16, chaque couvercle 5 présente, sur sa face radiale extérieure et en saillie longitudinale, deux pieds d'espacement diagonalement opposés 40 et deux pieds d'espacement diagonalement opposés 41, qui vont au-delà du disque radial correspondant 19.

Dans leurs parties médianes, les pieds d'espacement 40 présentent des bossages longitudinaux d'accouplement 42 et les pieds d'espacement 41 présentent des évidements longitudinaux d'accouplement 43.

Les bossages longitudinaux d'accouplement 42 et les évidements longitudinaux d'accouplement 43 sont de formes complémentaires et sont, d'un couvercle d'extrémité 5 à l'autre, alignés longitudinalement.

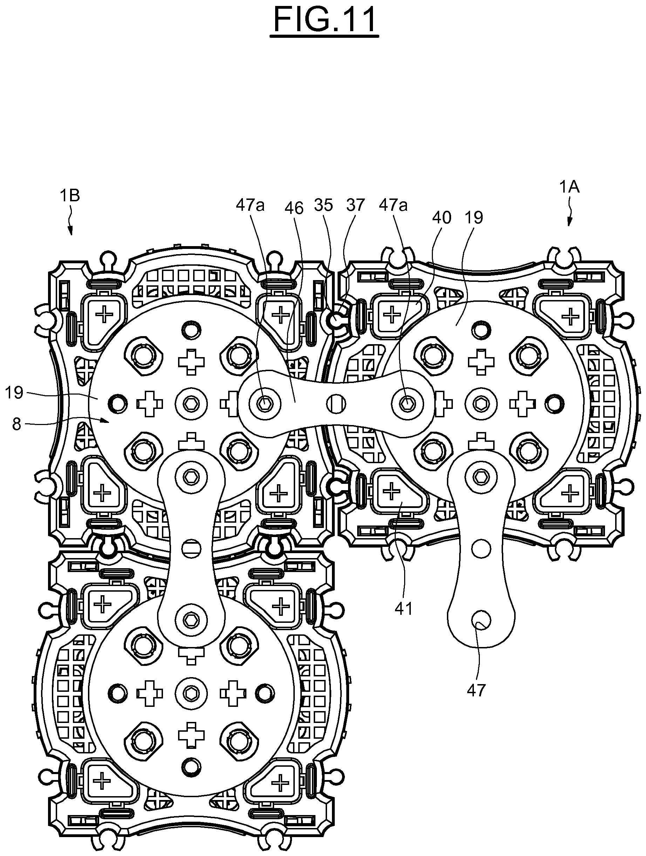

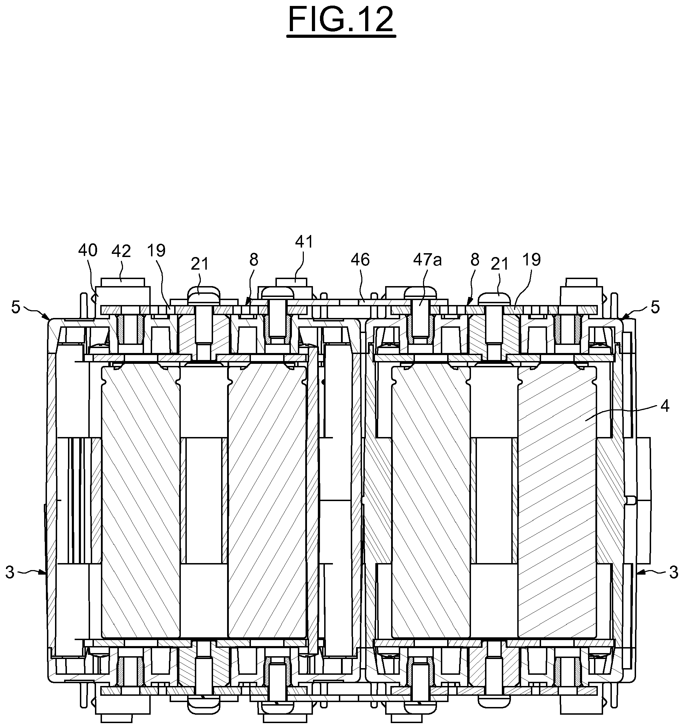

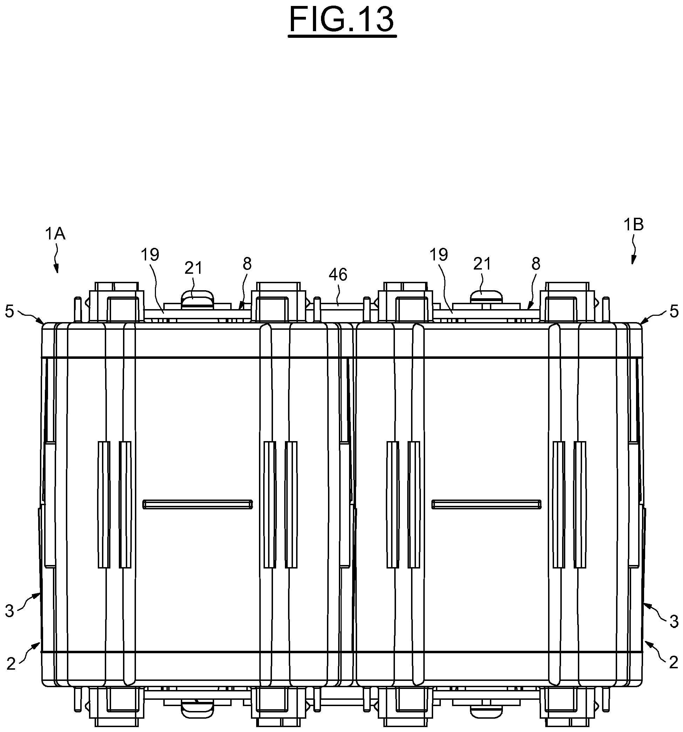

En se reportant aux figures 11, 12 et 13, on peut voir que deux modules de batterie 1A et 1B peuvent être placés l'un à côté de l'autre ou côte à côte et accouplés latéralement. Pour cela, par exemple, on engage longitudinalement les deux nervures longitudinales d'accouplement 35 de l'une des faces du module de batterie 1A dans deux rainures longitudinales d'accouplement 39 du module de batterie 1B, jusqu'à ce que les modules de batterie 1A et 1 B soient à la même hauteur, les faces latérales correspondantes 34 et 36 se plaçant de façon adjacentes.

Dans cette position assemblée, les disques radiaux métalliques 19 agencés aux extrémités des boîtiers 3 s'étendent respectivement dans des plans radiaux.

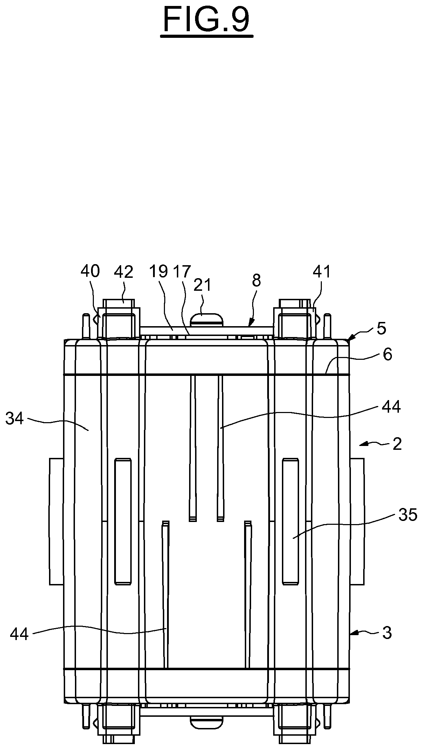

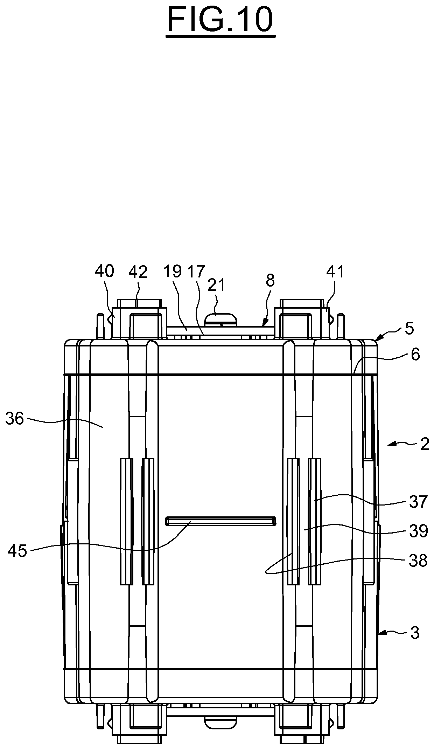

Pour indexer les modules de batterie dans cette position d'accouplement, les faces latérales 34 et 36 de chaque module de batterie peuvent présenter des nervures d'indexation coopérant les unes avec les autres. Par exemple, comme le montrent en particulier les figures 9 et 10, les faces latérales 34 peuvent présenter des nervures 44 espacées dans le sens longitudinal et les faces latérales 36 peuvent présenter une nervure transversale 45. Dans ladite position assemblée, la nervure transversale 45 se place dans l'espace séparant longitudinalement les nervures 44.

Les disques radiaux métalliques 19 situés dans un même plan radial peuvent être connectés électriquement grâce à une plaque métallique de liaison 46 présentant à ses extrémités des trous traversants 47. Pour cela, les parties d'extrémité de la plaque de liaison 46 sont disposées à plat sur les zones locales de distribution électrique des disques radiaux 19 entourant les trous 27 les plus proches de ces disques 19 et des vis de fixation 47a sont mises en place au travers des trous 47 et 27 et sont vissées dans les inserts correspondants 29 des couvercles 5 correspondants. La plaque de liaison 46 passe entre et à distance des pieds 40 et 41 adjacents des modules de batterie 1A et 1B.

Ainsi, la plaque métallique de liaison 46 peut être adaptée pour réaliser une liaison mécanique entre les modules de batterie 1A et 1 B.

Les modules de batterie 1A et 1B peuvent être assemblés dans un sens tel que les disques radiaux 19 situés dans un même plan soient des pôles de mêmes signes ou dans un sens opposé tel que les disques radiaux 19 situés dans un même plan soient des pôles de signes opposés.

En mettant en oeuvre l'assemblage décrit ci-dessus, on peut constituer une batterie complexe en couche constituée d'une pluralité souhaitée de modules de batterie 1 élémentaires adjacents, dans laquelle chaque module de batterie élémentaire est accouplé, dans un sens ou dans l'autre, à une, deux, trois ou quatre modules de batterie élémentaires adjacents et reliés électriquement, selon quatre directions possibles, à ces derniers par des plaques de liaison 46 conformément à un montage électrique souhaité.

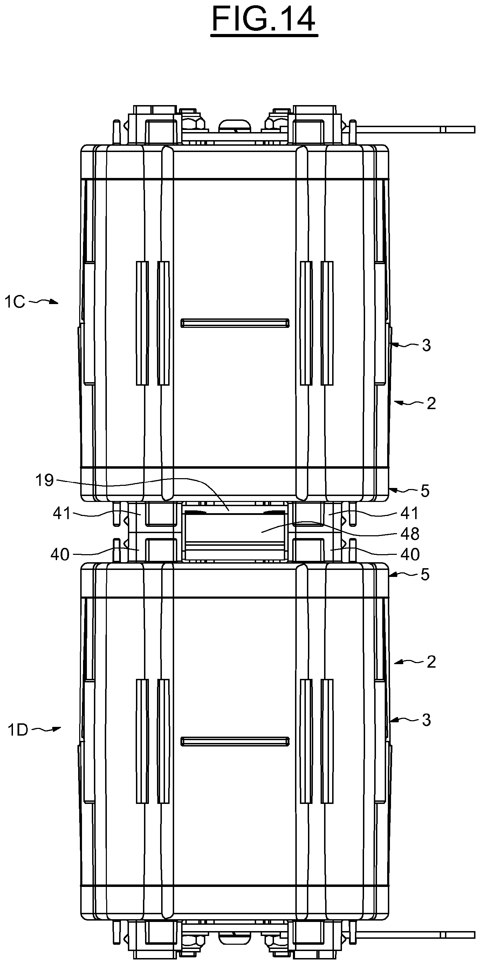

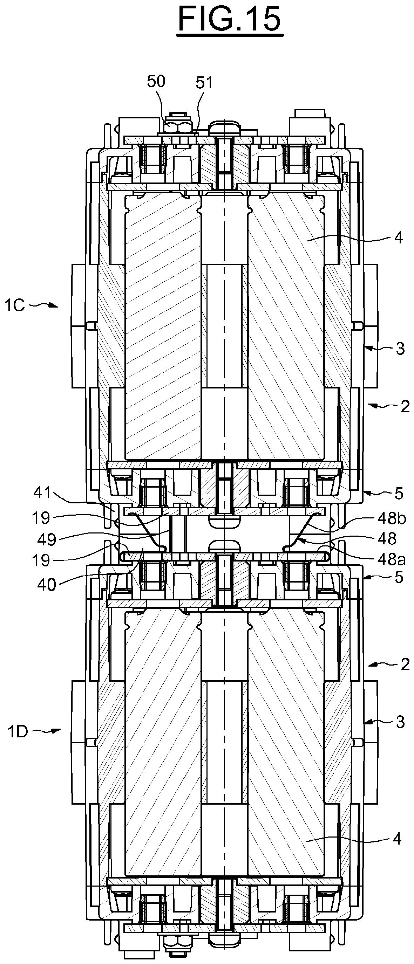

En se reportant aux figures 14 et 15, on peut voir que deux modules de batterie 1C et 1D peuvent être placés l'un au-dessus de l'autre et accouplés. Pour cela, on engage longitudinalement les bossages d'accouplement 42 dans les évidements d'accouplement 43 des pieds correspondants 40 et 41 des modules de batterie 1C et 1D jusqu'à ce qu'ils soient en butée. Les modules de batterie 1C et 1D sont alors alignés et accouplés longitudinalement et un disque radial 19 de l'un est situé en vis-à-vis et à faible distance d'un disque radial 19 de l'autre.

Pour relier électriquement en série ces disques radiaux 19, peuvent être prévues une ou plusieurs languettes métalliques élastiques 48 qui par exemple présentent une partie 48a en U qui enserre le bord du disque radial 19 de l'un des modules 1C et 1D et présentent une patte en porte-à-faux inclinée 48b en contact sur la face frontale du disque 19 de l'autre module. Selon une variante de réalisation, les disques radiaux 19 pourraient être reliés électriquement par l'intermédiaire d'une ou plusieurs pièces métalliques élastiques de section en forme de U ou de W, engagées latéralement de façon à prendre entre leurs branches opposées les disques radiaux 19.

Pour solidariser les modules de batterie 1C et 1D, on peut prévoir des tirants 49 isolés électriquement, les traversant librement en passant longitudinalement dans les canaux longitudinaux alignés précités de ces modules, formés respectivement par les trous traversants 30, les passages longitudinaux 31 et les trous traversants 32. Ces tirants 49 portent des écrous de serrage 50 prenant appui sur les disques radiaux 19, par l'intermédiaire de joints 51 d'isolation électrique dans le cas où ils seraient métalliques.

Selon une variante de réalisation, les tirants pourraient être placés longitudinalement à l'extérieur des modules et les écrous pourraient prendre appui sur les couvercles opposés de l'empilement de modules de batterie.

Selon une variante de réalisation, les tirants pourraient être supprimés et les languettes métalliques élastiques 48 pourraient être adaptées pour effectuer la liaison mécanique entre les modules de batterie 1C et 1D.

En mettant en oeuvre l'assemblage par empilement décrit ci-dessus, on peut constituer une batterie complexe en colonne, constituée d'une pluralité souhaitée de modules de batterie 1 élémentaires placés les uns au-dessus des autres. Dans chaque assemblage, chaque module de batterie élémentaire est accouplé, dans un sens ou dans l'autre, à un ou deux modules de batterie élémentaires adjacents et est relié électriquement à ces derniers par des languettes métalliques élastiques 48, selon un montage électrique en série.

Maintenant, en combinant l'assemblage côte à côte et l'assemblage par empilement décrits ci-dessus, on peut constituer une batterie tridimentionnelle composée d'une pluralité de couches et d'une pluralité de colonnes de modules de batterie 1, conformément à une disposition souhaitée et conformément à un montage électrique souhaité.

Selon une variante de réalisation, dans la mesure où les pattes d'accrochage 24 et les bossages d'accrochage 25 sont prévus suffisamment résistants, les vis de fixation 16 pourraient être supprimées, les plaques radiales intérieures de connexion électrique 7 étant maintenues entre les parties intérieures en saillie 19a des couvercles 5 et l'épaulement intérieur radial 14.

Selon une autre variante de réalisation, les pattes d'accrochage 24 et les bossages d'accrochage 25 pourraient être supprimés. Dans ce cas, les couvercles 5 pourraient être fixés sur le corps longitudinal 3 par des vis longitudinales.

Selon une variante de réalisation, les plaques radiales intérieures de connexion électrique 7 pourraient être formées par des plaques métalliques munies de languettes de contact sur les piles électriques 4 et portant les plots métalliques 17.

Selon une variante de réalisation, les plaques radiales extérieures de connexion électrique 8 pourraient être formées par des plaques en une matière isolante munies d'un réseau de connexion électrique.

Selon une variante de réalisation, les plots longitudinaux 17 pourraient être fixés sur les plaques radiales extérieures de connexion électrique 8 et reliés aux plaques radiales intérieures de connexion électrique 7 par des vis les traversant.

Selon une variante de réalisation, les plots longitudinaux 17 pourraient être pris en sandwich entre les plaques radiales extérieures de connexion électrique 8 et les plaques radiales intérieures de connexion électrique 7 et montés par des vis les traversant.

Selon une variante de réalisation, les plaques radiales intérieures de connexion électrique 7 pourraient être munies de plusieurs plots longitudinaux 17, espacés radialement.

Selon une variante de réalisation, le module de batterie pourrait comprendre, à l'une de ses extrémités, une autre disposition de connexion électrique des piles électriques 4, en série et/ou en parallèle.

Selon une variante de réalisation, le boîtier 2 pourrait être métallique et isolé électriquement des parties électriques précitées de la batterie.

Selon d'autres variantes de réalisation, le nombre de piles électriques pourrait être différent et leur disposition pourrait aussi être différente.

La présente invention ne se limite pas aux exemples ci-dessus décrits. Bien des variantes de réalisation sont possibles sans sortir du cadre de l'invention, telle que revendiquée.

## Revendications

1. Module de batterie électrique comprenant :
un boîtier (2) comprenant un corps longitudinal (3) apte à recevoir longitudinalement une pluralité de piles électriques (4), les unes à côté des autres, et un couvercle d'extrémité (5) accouplé à l'une des extrémités dudit corps longitudinal, ledit boîtier comprenant des premiers moyens d'accouplement (35 ; 42) et des seconds moyens d'accouplement (39 ; 43) de formes complémentaires, de telle sorte que des premiers moyens d'accouplement d'un module peuvent être accouplés à des seconds moyens d'accouplement d'au moins un autre module par conjugaison de formes ;
une plaque intérieure radiale de connexion électrique (7) et une plaque extérieure radiale de connexion électrique (8), disposées axialement de part et d'autre dudit couvercle d'extrémité (5) ;
et au moins un plot longitudinal de connexion électrique (17) desdites plaques intérieure et extérieure de connexion électrique, traversant axialement ledit couvercle (5) ;
ladite plaque intérieure radiale de connexion électrique (7) comprenant une pluralité de moyens de contact électrique (13) aptes à être respectivement en contact sur un contact électrique (4a) de l'une des extrémités desdites piles électriques (4) ; et
ladite plaque extérieure radiale de connexion électrique (8) comprenant une pluralité de moyens de distribution électrique (19, 27), de telle sorte que ces moyens de distribution électrique peuvent être sélectivement reliés à des moyens de distribution électrique d'au moins un autre module accouplé à ce module ;
et comprenant :
un autre couvercle d'extrémité accouplé à l'autre extrémité dudit corps longitudinal ;
une autre plaque intérieure radiale de connexion électrique et une autre plaque extérieure radiale de connexion électrique, disposées axialement de part et d'autre dudit autre couvercle d'extrémité ;
et au moins un autre plot longitudinal de connexion électrique desdites autres plaques intérieure et extérieure de connexion électrique, traversant axialement ledit autre couvercle ;
ladite autre plaque intérieure radiale de connexion électrique comprenant une pluralité de moyens de contact électrique aptes à être respectivement en contact sur un contact électrique (4b) de l'autre extrémité desdites piles électriques ; et
ladite autre plaque extérieure radiale de connexion électrique comprenant une pluralité de moyens de distribution électrique, de telle sorte que ces moyens de distribution électrique peuvent être sélectivement reliés à des moyens de distribution électrique d'au moins un autre module accouplé à ce module.

2. Module selon la revendication 1, comprenant un moyen de fixation (17, 21) traversant ledit couvercle (5) pour fixer lesdites plaques radiales intérieure et extérieure de connexion électrique (7, 8) l'une par rapport à l'autre, ce moyen de fixation incluant ledit plot de connexion électrique.

3. Module selon l'une des revendications 1 et 2, dans lequel au moins l'une (8) desdites plaques de connexion électrique comprend un disque métallique (19).

4. Module selon l'une quelconque des revendications précédentes, dans lequel au moins l'une (7) desdites plaques de connexion électrique comprend une plaque support en une matière isolante (11) et un réseau de connexion électrique (12) en une matière conductrice de l'électricité, porté par cette plaque support.

5. Module selon l'une quelconque des revendications précédentes, comprenant des moyens de fixation d'organes de connexion électrique (46), en contact sur lesdits moyens de contact électrique de ladite plaque radiale extérieure de connexion électrique (8).

6. Module selon l'une quelconque des revendications précédentes, comprenant des moyens de fixation (16) pour fixer ladite plaque intérieure de connexion électrique audit corps longitudinal.

7. Module selon l'une quelconque des revendications précédentes, comprenant des moyens de fixation (24, 25) pour fixer ledit couvercle audit corps longitudinal.

8. Module selon l'une quelconque des revendications précédentes, comprenant des moyens de fixation (21, 47a) pour fixer ladite plaque extérieure de connexion électrique audit couvercle.

9. Module selon l'une quelconque des revendications précédentes, dans lequel ladite plaque extérieure de connexion électrique (8) est en appui sur ledit couvercle (5), le moyen de fixation (17, 21) pour fixer lesdites plaques intérieure et extérieure de connexion électrique l'une par rapport à l'autre agissant axialement pour maintenir ledit couvercle accouplé axialement au corps longitudinal (3).

10. Module selon l'une quelconque des revendications précédentes, comprenant des moyens d'indexation (15, 16 ; 22, 23) de la plaque radiale intérieure de connexion électrique (7) et/ou de la plaque radiale extérieure de connexion électrique (8) par rapport au boîtier (2).

11. Module selon l'une quelconque des revendications précédentes, comprenant des moyens d'indexation (3a, 5a) du couvercle (5) par rapport audit corps longitudinal (3).

12. Module selon l'une quelconque des revendications précédentes, dans lequel le corps longitudinal comprend un cloisonnement intérieur (9) délimitant une pluralité de logements longitudinaux (10) pour recevoir les piles électriques.

13. Module selon l'une quelconque des revendications précédentes, dans lequel lesdits moyens d'accouplement sont aménagés sur les flancs (34, 36) dudit corps longitudinal (3).

14. Module selon la revendication 13, dans lequel lesdits moyens d'accouplement comprennent des rainures et des nervures longitudinales complémentaires.

15. Module selon l'une quelconque des revendications précédentes, dans lequel lesdits moyens d'accouplement (42, 43) sont aménagés sur ledit couvercle (5).

16. Module selon la revendication 15, dans lequel lesdits moyens d'accouplement comprennent des évidements et des bossages en saillie complémentaires.

17. Assemblage d'au moins deux modules de batterie selon l'une quelconque des revendications précédentes,
dans lequel deux modules de batterie (1A et 1B) sont placés longitudinalement l'un à côté de l'autre et accouplés latéralement par l'intermédiaire desdites premiers et seconds moyens d'accouplement complémentaires correspondants dans une position telle que leurs plaques extérieures radiales de connexion électrique s'étendent dans un même plan radial, ces plaques extérieures radiales de connexion électrique étant connectés électriquement par une plaque métallique de liaison (46) ;
et/ou dans lequel deux modules de batterie (1C, 1D) sont alignés l'un au-dessus de l'autre et accouplés longitudinalement par l'intermédiaire desdites premiers et seconds moyens d'accouplement complémentaires correspondants dans une position telle que leurs plaques extérieures radiales de connexion électrique s'étendent l'une en vis-à-vis de l'autre, ces plaques extérieures radiales de connexion électrique étant connectés électriquement par l'intermédiaire d'une languette élastique (48).

## Patentansprüche

1. Elektrisches Batteriemodul, welches umfasst:
ein Gehäuse (2), das einen sich längs erstreckenden Körper (3), der geeignet ist, in Längsrichtung mehrere elektrische Batterien (4) nebeneinander aufzunehmen, und eine Endabdeckung (5), die mit einem der Enden des sich längs erstreckenden Körpers gekoppelt ist, umfasst, wobei das Gehäuse erste Kopplungsmittel (35; 42) und zweite Kopplungsmittel (39, 43) mit komplementären Formen umfasst, derart, dass erste Kopplungsmittel eines Moduls mit zweiten Kopplungsmitteln wenigstens eines weiteren Moduls formschlüssig gekoppelt werden können;
eine radial innere elektrische Anschlussplatte (7) und eine radial äußere elektrische Anschlussplatte (8), die axial beiderseits der Endabdeckung (5) angeordnet sind;
und wenigstens ein sich längs erstreckendes elektrisches Verbindungsstück (17) der inneren und äußeren elektrischen Anschlussplatte, das die Abdeckung (5) axial durchquert;
wobei die radial innere elektrische Anschlussplatte (7) mehrere elektrische Kontaktmittel (13) umfasst, die geeignet sind, sich jeweils in Kontakt mit einem elektrischen Kontakt (4a) eines der Enden der elektrischen Batterien (4) zu befinden; und
wobei die radial äußere elektrische Anschlussplatte (8) mehrere elektrische Verteilungsmittel (19, 27) umfasst, derart, dass diese elektrischen Verteilungsmittel selektiv mit elektrischen Verteilungsmitteln wenigstens eines weiteren Moduls, das mit diesem Modul gekoppelt ist, verbunden werden können;
und umfasst:
eine weitere Endabdeckung, die mit dem anderen Ende des sich längs erstreckenden Körpers gekoppelt ist;
eine weitere radial innere elektrische Anschlussplatte und eine weitere radial äußere elektrische Anschlussplatte, die axial beiderseits der weiteren Endabdeckung angeordnet sind;
und wenigstens ein weiteres sich längs erstreckendes elektrisches Verbindungsstück der weiteren inneren und äußeren elektrischen Anschlussplatte, das die weitere Abdeckung axial durchquert;
wobei die weitere radial innere elektrische Anschlussplatte mehrere elektrische Kontaktmittel umfasst, die geeignet sind, sich jeweils in Kontakt mit einem elektrischen Kontakt (4b) des anderen Endes der elektrischen Batterien zu befinden; und
wobei die weitere radial äußere elektrische Anschlussplatte mehrere elektrische Verteilungsmittel umfasst, derart, dass diese elektrischen Verteilungsmittel selektiv mit elektrischen Verteilungsmitteln wenigstens eines weiteren Moduls, das mit diesem Modul gekoppelt ist, verbunden werden können.

2. Modul nach Anspruch 1, welches ein Befestigungsmittel (17, 21) umfasst, das den Deckel (5) durchquert, um die radial innere und die radial äußere elektrische Anschlussplatte (7, 8) relativ zueinander zu fixieren, wobei dieses Befestigungsmittel das elektrische Verbindungsstück beinhaltet.

3. Modul nach einem der Ansprüche 1 und 2, wobei wenigstens eine (8) der elektrischen Anschlussplatten eine Metallscheibe (19) umfasst.

4. Modul nach einem der vorhergehenden Ansprüche, wobei wenigstens eine (7) der elektrischen Anschlussplatten eine Stützplatte aus einem isolierenden Material (11) und ein elektrisches Verbindungsnetz (12) aus einem elektrisch leitenden Material, das von dieser Stützplatte getragen wird, umfasst.

5. Modul nach einem der vorhergehenden Ansprüche, welches Befestigungsmittel elektrischer Verbindungsorgane (46) umfasst, die sich mit den elektrischen Kontaktmitteln der radial äußeren elektrischen Anschlussplatte (8) in Kontakt befinden.

6. Modul nach einem der vorhergehenden Ansprüche, welches Befestigungsmittel (16) zum Befestigen der inneren elektrischen Anschlussplatte an dem sich längs erstreckenden Körper umfasst.

7. Modul nach einem der vorhergehenden Ansprüche, welches Befestigungsmittel (24, 25) zum Befestigen der Abdeckung an dem sich längs erstreckenden Körper umfasst.

8. Modul nach einem der vorhergehenden Ansprüche, welches Befestigungsmittel (21, 47a) zum Befestigen der äußeren elektrischen Anschlussplatte an der Abdeckung umfasst.

9. Modul nach einem der vorhergehenden Ansprüche, wobei sich die äußere elektrische Anschlussplatte (8) auf die Abdeckung (5) stützt, wobei das Befestigungsmittel (17, 21) zum Fixieren der inneren und äußeren elektrischen Anschlussplatte relativ zueinander axial wirkt, um die Abdeckung mit dem sich längs erstreckenden Körper (3) axial gekoppelt zu halten.

10. Modul nach einem der vorhergehenden Ansprüche, welches Mittel zur Indexierung (15, 16; 22, 23) der radial inneren elektrischen Anschlussplatte (7) und/oder der radial äußeren elektrischen Anschlussplatte (8) bezüglich des Gehäuses (2) umfasst.

11. Modul nach einem der vorhergehenden Ansprüche, welches Mittel zur Indexierung (3a, 5a) der Abdeckung (5) bezüglich des sich längs erstreckenden Körpers (3) umfasst.

12. Modul nach einem der vorhergehenden Ansprüche, wobei der sich längs erstreckende Körper ein System innerer Trennwände (9) umfasst, die mehrere sich längs erstreckende Aufnahmen (10) zum Aufnehmen der elektrischen Batterien begrenzen.

13. Modul nach einem der vorhergehenden Ansprüche, wobei die Kopplungsmittel an den Seitenwänden (34, 36) des sich längs erstreckenden Körpers (3) angeordnet sind.

14. Modul nach Anspruch 13, wobei die Kopplungsmittel zueinander komplementäre, längs verlaufende Nuten und Rippen umfassen.

15. Modul nach einem der vorhergehenden Ansprüche, wobei die Kopplungsmittel (42, 43) an der Abdeckung (5) angeordnet sind.

16. Modul nach Anspruch 15, wobei die Kopplungsmittel zueinander komplementäre Aussparungen und vorstehende Höcker umfassen.

17. Anordnung von wenigstens zwei Batteriemodulen nach einem der vorhergehenden Ansprüche,
wobei zwei Batteriemodule (1A und 1B) längs nebeneinander angeordnet und seitlich mittels der ersten und zweiten entsprechenden komplementären Kopplungsmittel in einer solchen Position gekoppelt sind, dass sich ihre radial äußeren elektrischen Anschlussplatten in derselben radialen Ebene erstrecken, wobei diese radial äußeren elektrischen Anschlussplatten durch eine metallische Verbindungsplatte (46) elektrisch verbunden sind;
und/oder wobei zwei Batteriemodule (1C, 1D) übereinander ausgerichtet sind und in Längsrichtung mittels der ersten und zweiten entsprechenden komplementären Kopplungsmittel in einer solchen Position gekoppelt sind, dass sich ihre radial äußeren elektrischen Anschlussplatten einander gegenüber erstrecken, wobei diese radial äußeren elektrischen Anschlussplatten durch eine elastische Zunge (48) elektrisch verbunden sind.

## Claims

1. An electric battery module comprising:
a casing (2) comprising a longitudinal body (3) suitable for longitudinally receiving a plurality of electric cells (4), one next to the other, and an end cover (5) coupled to one of the ends of said longitudinal body, said casing comprising first coupling means (35; 42) and second coupling means (39; 43) of complementary forms, such that the first coupling means of a module may be coupled to second coupling means of at least one other module, by mating of forms;
an internal radial electrical connection plate (7) and an external radial electrical connection plate (8), arranged axially on either side of said end cover (5);
and at least one longitudinal electrical connection pad (17) of said internal and external electrical connection plates axially traversing said cover (5);
the said internal radial electrical connection plate (7) comprising a plurality of electrical contact means (13) suitable for being respectively in contact on an electrical contact (4a) of one end of said electric cells (4); and
the said external radial electrical connection plate (8) comprising a plurality of electrical distribution means (19, 27), such that these electrical distribution means may be selectively connected to electrical distribution means of at least one other module coupled to this module;
and comprising :
another end cover coupled to the other end of said longitudinal body;
another internal radial electrical connection plate comprising a plurality of electrical contact means suitable for being respectively in contact on the other end of said electric cells;
another external radial electrical connection plate comprising a plurality of electrical contact means for external electrical links of this external plate;
and another electrical connection means of said other internal and external electrical connection plates, axially traversing said other cover;
the said another internal radial electrical connection plate comprising a plurality of electrical contact means suitable for being respectively in contact on an electrical contact (4b) of the other end of said electric cells; and
the said another external radial electrical connection plate comprising a plurality of electrical distribution means, such that these electrical distribution means may be selectively connected to electrical distribution means of at least one other module coupled to this module.

2. The module as claimed in claim 1, comprising a fastening means (17, 21) traversing said cover (5) for fastening said internal and external radial electrical connection plates (7, 8) relative to one another, this fastening means including said electrical connection pad

3. The module as claimed in one of claims 1 and 2, wherein at least one (8) of said electrical connection plates comprises a metal disk (19).

4. The module as claimed in any one of the preceding claims, wherein at least one (7) of said electrical connection plates comprises a support plate made from an insulating material (11) and an electrical connection network (12) made from an electrically conducing material, carried by this support plate.

5. The module as claimed in any one of the preceding claims, comprising fastening means of electrical connection members (46), in contact on said electrical contact means of said external radial electrical connection plate (8).

6. The module as claimed in any one of the preceding claims, comprising fastening means (16) for fastening said internal electrical connection plate to said longitudinal body.

7. The module as claimed in any one of the preceding claims, comprising fastening means (24, 25) for fastening said cover to said longitudinal body.

8. The module as claimed in any one of the preceding claims, comprising fastening means (21, 47a) for fastening said external electrical connection plate to said cover.

9. The module as claimed in any one of the preceding claims, wherein said external electrical connection plate (8) bears on said cover (5), the fastening means (17, 21) for fastening said internal and external electrical connection plates relative to one another acting axially to maintain said cover coupled axially to the longitudinal body (3).

10. The module as claimed in any one of the preceding claims, comprising indexing means (15, 16; 22, 23) of the internal radial electrical connection plate (7) and/or of the external radial electrical connection plate (8) relative to the casing (2).

11. The module as claimed in any one of the preceding claims, comprising indexing means (3a, 5a) of the cover (5) relative to said longitudinal body (3).

12. The module as claimed in any one of the preceding claims, wherein the longitudinal body comprises an internal partition (9) delimiting a plurality of longitudinal housings (10) for receiving the electric cells.

13. The module as claimed in any one of the preceding claims, wherein said coupling means are provided on the flanks (34, 36) of said longitudinal body (3).

14. The module as claimed in claim 13, wherein said coupling means comprise complementary longitudinal grooves and ribs.

15. The module as claimed in any one of the preceding claims, wherein said coupling means (42, 43) are provided on said cover (5).

16. The module as claimed in claim 15, wherein said coupling means comprise complementary recesses and projecting bosses.

17. An assembly of at least two battery modules as claimed in any one of the preceding claims,
wherein two battery modules (1A and 1B) are placed longitudinally one next to the other and coupled laterally by means of said first and second corresponding complementary coupling means in a position such that their external radial electrical connection plates extend in one and the same radial plane, these external radial electrical connection plates being electrically connected by a metal link plate (46);
and/or wherein two battery modules (1C, 1D) are aligned one above the other and coupled longitudinally by means of said first and second corresponding complementary coupling means in a position such that their external radial electrical connection plates extend one facing the other, these external radial electrical connection plates being electrically connected by means of an elastic bar (48).
